# EUROPEAN PATENT APPLICATION

(11) **EP 4 764 831 A1**
(43) Date of publication of application: **24.06.2026**
(21) Application number: 24222882.3
(22) Date of filing: 23.12.2024
(51) Int. Cl.: G06F 8/60, G06F 8/71

(54) **PACKAGING OF INFRASTRUCTURE AS CODE MODULES CONTAINING BINARY ARTIFACTS**

(71) Applicant: Barclays Execution Services Limited, London E14 5HP (GB)
(72) Inventor: EDGE,, Jamie, London, E14 5HP (GB)
(74) Representative: Carpmaels & Ransford LLP

(57) **Abstract**

A computer-implemented method of packaging one or more module source files for an infrastructure as code, laC, module, wherein the laC module is not able to store binary files, the method comprising: parsing one or more module source files to identify at least one relative path to a binary file; for each relative path identified, adjusting the one or more module source files by replacing the relative path with an absolute path to an object stored in a cloud-based object storage, the object containing content from the binary file; and packaging the one or more adjusted module source files into the laC module.

## Description

### Technical Field

This disclosure relates to the packaging and deploying of infrastructure-as-code (laC) modules containing binary artifacts. More particularly, this disclosure relates to a computer-implemented method of, a system for, and a computer program product for packaging one or more module source files for an laC module, wherein the laC module is not able to store binary files, and a method of deploying the laC module.

### Background

Infrastructure as code (laC) applications, such as Terraform by HashiCorp^{®}, allow developers to define and deploy infrastructure, i.e., cloud-based resources, such as servers, networks, virtual machines, operating systems, etc., using code. laC applications are often employed during DevOps pipelines to test and deploy software using cloud-based resources. An advantage of laC, both as an application and as a methodology, is that it allows developers to consistently and efficiently deploy infrastructure, i.e., cloud-based resources, by, e.g., invoking previously defined code.

Oftentimes, developers will seek to reuse or replicate previously defined and deployed infrastructure to perform or repeat common functions. If one considers a given software function or set of functions to represent a subset of a wider application or pipeline, laC applications allow developers to define the infrastructure responsible for performing said function or set of functions as a module. A module groups distinct laC resources, e.g., source code and data files, into a single, unified resource for subsequent deployment using an laC application. Given that reusability is important when using laC applications, laC modules provide an efficient and effective way to re-deploy previously defined infrastructure.

Modules developed using laC applications can be stored on a version control system (VCS), such as Git, which can be local, central or distributed, and which allows source code for a given function, set of functions or application to be maintained over a development lifecycle, with the VCS tracking changes, versions, and various types of metadata. However, it is generally not considered good practice to store laC modules in a VCS since it can create multiple sources of truth, complicate state management, limit modular reuse, and increase the risk of exposing sensitive information.

An alternative way to store an laC module is to use a module registry associated with a given laC application. A module registry, which can be public or private, provides a repository for developers to store modules, run tasks, policies, etc., to enable ease of deployment and reuse of laC-defined infrastructure. As such, functions and/or applications developed using a modular approach in a given build environment can be packaged and uploaded to a module registry associated with an laC application for subsequent deployment of the laC module by the laC application.

A problem exists, however, in that module registries associated with some laC applications only store module data in text form, which presents an issue for laC modules that leverage binary artifacts, i.e., binary files, to perform given laC functions. For example, some languages used to code laC functions, e.g., Go, involve the use of binary files. When seeking to package one or more source files as an laC module for upload to a laC application module registry, the binary files cannot be published to the module registry as part of the module. The only way, therefore, to allow use of binary files with said modules is to do so manually, e.g., by manually configuring cloud-based resources deployed using said modules to reference the binary files. Accordingly, there exists a need for a solution that enables the packaging of laC modules that leverage binary artifacts (i.e., for upload to an laC module registry) without the modules having to be stored in a VCS.

It is an object of the present invention, therefore, to provide a means for packaging one or more module source files (containing binary files) for an laC module, where the laC module is not able to store binary files.

### Summary

The present invention is defined by the independent claims, with further optional features being defined by the dependent claims.

In a first aspect of the invention, there is provided a computer-implemented method of packaging one or more module source files for an infrastructure as code, laC, module, wherein the laC module is not able to store binary files, the method comprising:
parsing one or more module source files to identify at least one relative path to a binary file;
for each relative path identified, adjusting the one or more module source files by replacing the relative path with an absolute path to an object stored in a cloud-based object
storage, the object containing content from the binary file; and
packaging the one or more adjusted module source files into the laC module.

The method of the invention enables the packaging of one or more module source files that reference at least one binary file local to the module source files for an laC module in such a way that ensures the compatibility of the laC module with an laC application module registry that is not able to store binary files. Specifically, by automatically replacing binary file references, the method packages the module source files in such a way that permits the deployment of laC-defined infrastructure, i.e., cloud-based resources, without the intervention of a developer and without having to rely on a version control system. This enables deployment of the laC module from an laC application module registry that does not support the storage of binary files. As such, a developer need not manually configure the laC-defined infrastructure to invoke the binary files when deploying the laC module.

By parsing one or more module source files to identify at least one relative path to a binary file, the method determines, as a preliminary matter, whether the laC module build, i.e., the module source files, include references to one or more local binary files. Accordingly, this step alleviates a developer of the need to expressly identify and/or locate binary files, or references thereto, within the module source files.

For each relative path identified, the method continues by adjusting the one or more module source files by replacing the relative path with an absolute path to an object stored in a cloud-based object storage, the object containing content from the binary file. Recognising that the content from the binary file cannot directly be packaged into the laC module, i.e., for storage in an laC application module registry not able to store binary files, this step of the method ensures that the content from the binary file can be fetched by the relevant cloud-based resources when the laC module is deployed by an laC application. Specifically, this step of the method allows the content from the binary file to be fetched by the relevant cloud-based resources using the absolute path which, in this context, routes to the object (containing the content from the binary file) stored in the cloud-based object storage. Accordingly, this step of the method ensures the compatibility of the laC module with an laC application module registry not able to store binary files, without sacrificing on the desired functionality of the laC module.

By packaging the one or more adjusted module source files into an laC module, the method reformats the module source files into a format, i.e., an laC module (package), suitable for upload to an laC application module registry not able to store binary files. Once packaged, the laC module is ready for upload to the laC application module registry, after which the one or more infrastructure functions, i.e., cloud-based resources, represented by the laC module can be deployed by the laC application. The deployment requires, with the exception of initiating the deployment, no user intervention to fully deploy the module.

In some embodiments, the method further comprises:
for each relative path to a binary file identified, checking a cache for a copy of the relative path.

By checking, for each relative path to a binary filed identified, a cache for a copy of the relative path, the method allows for performing a check of whether or not an absolute path to an object containing content from the binary file already exists in the cloud-based object storage. This is because the storage of a copy of the relative path in the cache represents, at a high level, an indication that the relative path has previously been identified. Accordingly, by performing this check, the method is able to avoid repetition downstream, i.e., when adjusting the one or more module source files by replacing the relative path with an absolute path. In particular, the method is used to ensure that no duplicated copies of the binary file are created in the cloud-based object storage.

In some embodiments, the method further comprises:
determining that the copy of the relative path is present in the cache; and
constructing the absolute path from an object identifier associated with the object and stored in the cache,
wherein the object stored in the cloud-based storage is a pre-existing object, and wherein the absolute path is a pre-existing absolute path identified from the cache.

In some embodiments, determining that the copy of the relative path is present in the cache comprises:
looking up in the cache, using the relative path as a first key for a first hash map, a checksum based on the content from the binary file; and
looking up in the cache, using the checksum as a second key for a second hash map, the object identifier associated with the object,
wherein the object identifier comprises a copy of the checksum and an object key based on the checksum, and
wherein constructing the absolute path from an object identifier associated with the object and stored in the cache comprises:
   constructing the absolute path from the object key and a domain name associated with the cloud-based object storage; and
   verifying, using the copy of the checksum, that the object contains the content from the binary file.

Where a given set of module source files contains more than one reference, i.e., relative path, to a given binary file, or where a reference to a given binary file in an iteration of the method is the same as a reference during a previous iteration of the method (and within the same directory, i.e., local environment), there may already exist an absolute path to an object in the cloud-based object storage, where the object contains the content from the given binary file. As such, the process of checking the cache for a copy of the relative path and determining that a copy of the relative path is present in the cache enables the method to replace the relative path with a pre-existing absolute path, as opposed to creating a new object and absolute path, entirely. Accordingly, where the content from a given binary file is already stored in an object in the cloud-based object storage, e.g., based on a previous reference to the binary file, the method can update the associated relative path to a pre-existing absolute path associated with the object, avoiding repetition in the process of creating and uploading an object to the cloud-based object storage and obtaining an absolute path, thereto.

In some embodiments, the method further comprises:
determining that the copy of the relative path is not found in the cache;
instructing the cloud-based object storage to create and store the object; and storing, in the cache, an object identifier associated with the object.

In some embodiments, determining that the copy of the relative path is not found in the cache comprises:
searching the cache for the copy of the relative path; and
finding no copy of the relative path in the cache.

In some embodiments, instructing the cloud-based object storage to create and store the object comprises:
reading the content from the binary file;
creating a checksum based on the content from the binary file;
creating an object key based on the checksum;
determining, based on the object key, that a pre-existing object containing content from the binary file does not exist in the cloud-based object storage;
instructing the cloud-based object storage to create and store the object based on the object key; and
uploading the content from the binary file to the object.

In some embodiments, the object identifier associated with the object comprises the object key and a copy of the checksum.

Where the content from a given binary file has yet to be stored in, i.e., uploaded to, the cloud-based object storage, the method enables the creation and the storage of an object containing the content from the binary file in the cloud-based object storage. To know whether to do this, the method first determines that a copy of the relative path, the original of which has been identified from the one or more module source files, is not found in the cache - this indicates that an object containing the content from the specific binary file has yet to be created and stored in the cloud-based object storage. As discussed, this is because the storage of a copy of the relative path in the cache represents, at a high level, an indication that the relative path has previously been identified. By checking whether a pre-existing cloud-based object exists for a given binary file on the basis of identifying a copy of the relative path in the cache, alone, the method simplifies the process of determining whether or not the content of a given binary file exists within the cloud-based object storage, i.e., since the method is not required to search the cloud-based object storage to determine this. Similarly, by instructing the creation and storage a new object in the cloud-based object storage based, ultimately, on the content from the binary file, and by storing in the cache an object identifier for the object based on the same content, the method simplifies the process of being able to identify the existence of a pre-existing object in the cloud-based object storage for the content from the given binary file since it will not be required to check the cloud-based object storage to do this, only the cache.

As discussed, the object containing the content from the binary file is able to be referenced by the cloud-based resources created when deploying the laC module using an laC application. The cloud-based resources that may be created from the laC module are, therefore, able to fetch the binary files for use therewith.

In some embodiments, instructing the cloud-based object storage to create and store the object comprises:
reading the content from the binary file;
creating a checksum based on the content from the binary file;
creating an object key based on the checksum;
determining, based on the object key, the presence of a pre-existing object containing content from the binary file in the cloud-based object storage; and
verifying, using the checksum, that the pre-existing object contains the content from the binary file;
wherein the object stored in the cloud-based storage is the pre-existing object.

In an instance where a given binary file has not previously been referenced, the method may assume, provisionally, that a pre-existing object in the cloud-based object storage does not exist for the content from the given binary file. However, where a different binary file has the same content as the given binary file, and there already exists for the different binary file an associated object in the cloud-based object storage, the method need not create a new object in the cloud-based object storage and may instead map the relative path to the pre-existing object. The method allows a check of whether the content from a given binary file is already stored in the cloud-based object storage since the object key and the checksum are constructed from the content from the binary file. Not creating a new object ensures the method avoids unnecessary duplication.

In some embodiments, the laC module is deployable by an laC application to create one or more cloud-based resources based on the laC module, and the laC module is configured for storage in an laC application module registry associated with the laC application and not able to store binary files.

In some embodiments, the laC application is Terraform.

In some embodiments, the method is performed by a packaging tool within a build environment.

In some embodiments, the binary files and/or the one or more module source files are stored within the build environment.

In some embodiments, the binary files and/or the one or more module source files are created within the build environment.

In some embodiments, the method further comprises:
prior to parsing one or more module source files to identify at least one relative path to a binary file, searching the build environment for the one or more module source files.

The method of the present invention is applicable for use in the context of the laC application, Terraform. The Terraform module registry does not support the storage of binary files, and so the method of the invention provides a means to overcome manually configuring cloud-based resources deployed using Terraform to reference specific binary files. A build environment, which may be used to package an laC module for deployment using Terraform, may be used to create and/or store the module source files and the binary files. Accordingly, the relative paths referenced by the module source files may be to locations within a repository within the build environment that stores the module source files and the binary files. As the relevant files for packaging the laC module may be located in a single repository, a packaging tool may be initiated therein to more efficiently perform the methods of the invention.

In a second aspect of the invention, there is provided a system comprising:
a packaging tool configured to perform any of the methods of the first aspect of the invention.

In a third aspect of the invention, there is provided computer program product storing instructions which, when executed, cause a computer to perform any of the methods of the first aspect of the invention.

In a fourth aspect of the invention, there is provided a computer-implemented method of deploying an laC module to create one or more cloud-based resources using an laC application, the method comprising:
performing the method of the first aspect of the invention to package an laC module;
uploading the laC module to an laC application module registry associated with the laC application, wherein the laC application module registry is not able to store binary files; and
invoking the laC application to deploy the laC module uploaded to the laC application module registry to create one or more cloud-based resources based on the laC module,
wherein the one or more cloud-based resources are configured to reference each absolute path to the cloud-based object storage and are capable of fetching the respective binary file from the cloud-based object storage based on the respective absolute path.

As discussed, by packaging the module source files according to the first aspect of the invention, the invention provides an laC module compatible with an laC application module registry not able to store binary files. The laC module may, therefore, be deployed using an associated laC application once the laC module is uploaded to the laC application module registry. The methods of the invention allow for deploying the laC module so as to create one or more cloud-based resources that can themselves access the binary files, e.g., from a cloud-based object storage provisioned on a common cloud account to that on which the cloud-based resources are created. Accordingly, the invention further provides an efficient means for deploying one or more module source files (containing binary files) using an laC application and an associated laC application module registry not able to store binary files.

### Brief Description of the Drawings

Embodiments of the invention are described below, by way of example, with reference to the following drawings, in which:
Fig. 1 shows a physical machine according to an embodiment of the invention.
Fig. 2 shows a system for packaging one or more module source files for an laC module, wherein the laC module is not able to store binary files, according to an embodiment of the invention.
Fig. 3 shows a flow diagram of a method of packaging one or more module source files for an laC module, wherein the laC module is not able to store binary files, according to an embodiment of the invention.
Fig. 4 shows a flow diagram of a method of deploying an laC module to create one or more cloud-based resources using an laC application, according to an embodiment of the invention.

### Detailed Description

In the description and figures that follow, certain exemplary embodiments of the disclosure are described. As discussed, the present disclosure pertains to a method of, a system for, and a computer program product for packaging one or more module source files for an laC module, wherein the laC module is not able to store binary files. The present disclosure further pertains to a method of deploying an laC module to create one or more cloud-based resources using an laC application.

As discussed, laC applications allow developers to define and deploy computing infrastructure, e.g., cloud-based resources on a cloud platform, using code. One way of doing this is to deploy, using the laC application, an laC module, which groups module source files, e.g., source code and referenced file data, into a single, unified resource. The process of grouping the module source files is known as "packaging" and involves transforming the module source files into an laC module, otherwise known as an laC module package. For a given laC application to deploy laC modules, the laC modules may be stored on an laC application module registry associated with the laC application. An laC application module registry is, as discussed, a repository associated with an laC application for storing, amongst other things, laC modules for subsequent deployment using the laC application.

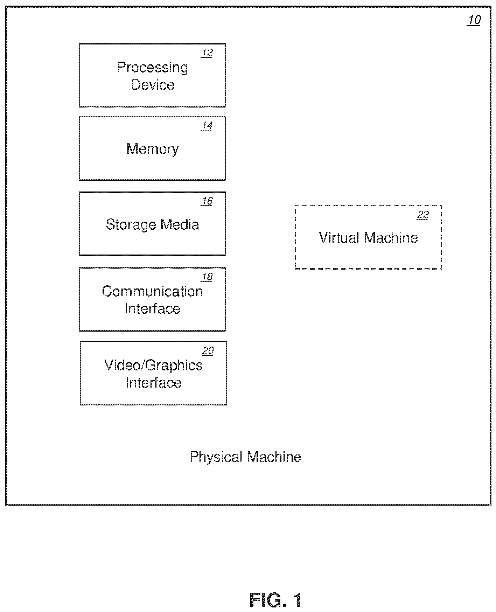

Referring to Fig. 1, a physical machine 10 is shown. The physical machine 10 may be embodied by any type of suitable physical computer or server, as a complete and standalone hardware unit, with its own physical components, such as a processing device 12, a memory 14, a storage media 16, a communication interface 18, and a video/graphics interface 20. In addition, a virtual machine 22 may be provisioned on the physical machine 10. The physical machine, in isolation or in combination with the virtual machine 22, may represent a build environment 110 which, as discussed below, may be used to facilitate the methods disclosed, herein. The physical machine 10 may be provisioned in a "local" environment, e.g., local to a developer, and/or may be located on the cloud.

The processing device 12 may include its own memory (e.g., read only memory (ROM) and random-access memory (RAM)) for storing processor-executable instructions and one or more processors that execute processor-executable instructions. The processing device 12 may execute an operating system of the physical machine 10 and/or other software associated with the physical machine 10. The processing device 12 may execute instructions disclosed, herein, to perform all or part of the methods disclosed, herein.

The memory 14 may be any device that stores data generated or received by components of the build environment (e.g., a random-access memory (RAM) device and/or a read only memory (ROM) device). The memory 14 may support the cache and temporary store of data associated with each of the other components of the physical machine 10.

The storage media 16 may be any form of non-volatile data storage device, such as one or more of a hard disk drive, a magnetic disc, an optical disc, a ROM, etc. The storage media 16 may store an operating system for the processing device 12 to execute in order for the physical machine 10 to function. The storage media 16 may also store one or more computer programs (or software or instructions or code). The storage media 16 may store media to support the execution of methods disclosed, herein.

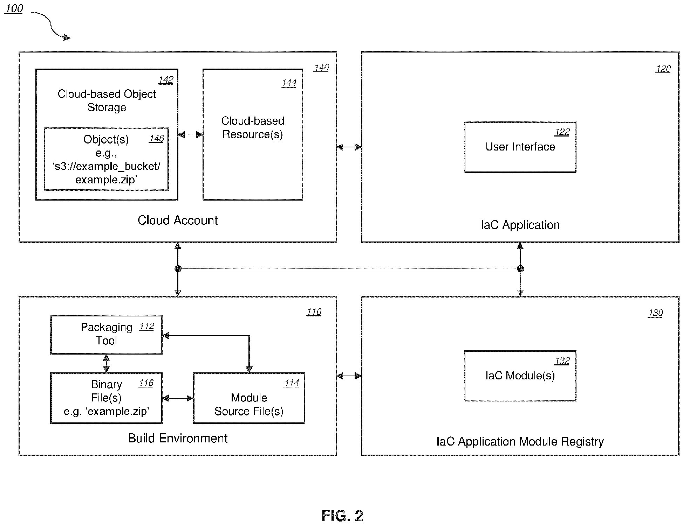

The communication interface 18 may permit communication between the physical machine 10 (and the components, thereof) and interfacing devices, e.g., user input devices, external machines and/or servers, external networks and so on. The communication interface 18 may include one or more wired or wireless transceivers for communicating with external devices (e.g., via Wi-Fi, Bluetooth, Ethernet and so on). The communication interface 18 may be configured to transmit data to, and receive data from, a remote server or processing device (e.g., located on a cloud server). In embodiments where the physical machine provides all or part of the build environment 110 (as discussed with reference to Fig. 2), the communication interface 18 may permit interaction between the build environment 110 and the other components of the system 100 (discussed further with reference to Fig. 2) to perform the methods disclosed, herein.

The video/graphics interface 20 may generate and permit the display of a graphical user interface, e.g., on a display interfacing with the physical machine 10 via the communication interface 18, representing, e.g., user interaction with an interface of an operating system. A developer may interact with the physical machine 10 using one or more user input devices, via the video/graphics interface 20 and the communication interface 18, to enable the physical machine 10 to facilitate the methods disclosed, herein.

Collectively, the components of the physical machine 10 may support the implementation and execution of a virtual machine 22 on the physical machine 10. The physical machine 10 may host one or more multiple virtual machines 22, each running independently from one another. While each virtual machine 22 has its own CPU, RAM, and storage, these computing resources are finite and collectively supplied by the physical components of the physical machine 10. The virtual machine 22 may be provisioned on and/or terminated from the physical machine 10 at the point of request, e.g., via a platform, operating system or application, executing on the physical machine 10.

A virtual machine is a compute resource that uses software instead of a physical computer to run programs, deploy applications, and so on. Virtual machines are based on computer architectures and provide the functionality of a physical machine. Their implementations may involve specialised hardware, software, or a combination of the two. Each virtual machine runs its own operating system and functions separately from other virtual machines, even when they are all running on the same host physical machine. Virtual machines may be deployed to accommodate different levels of processing power needs, to run software that requires a different operating system, or to test applications in a safe, sandboxed environment. In embodiments where the build environment 110 is embodied by a physical machine and a virtual machine, the build environment 110 may encompass the physical machine 10, in combination with the virtual machine 22 provisioned thereon.

Referring to Fig. 2, a system 100 for packaging one or more module source files for an laC module is shown. The system 100 comprises, at the highest level, a build environment 110, an laC application 120, an laC application module registry 130, and a cloud account 140. The system 100 and, more particularly, the packaging tool 112 may be configured to perform all or part of the methods disclosed, herein. The respective components, both optional and otherwise, of the system 100 are discussed below.

The build environment 110 may be provisioned on the physical machine 10, as discussed with reference to Fig. 1. Alternatively, the build environment 110 may be provisioned on one or more servers, locally to a developer, in the cloud, or across a combination of the two. The build environment 110 may be provisioned and/or utilised by a developer to create and/or store and/or package module source files 114 into one or more laC modules 132. In other words, the build environment 110 may be provisioned for defining laC modules 132. The build environment 110 may comprise a packaging tool 112, one or more module source files 114, and one or more binary files 116.

The packaging tool 112 may be a software application or utility provisioned within the build environment 110, either running directly on the physical machine 10 or as provisioned on the virtual machine 22. In either case, the packaging tool 112 may be configured to perform the packaging methods disclosed, herein. For the purposes of the present disclosure, the term 'packaging' takes its ordinary meaning in the art, i.e., to describe a process of creating a unified resource or folder that contains the necessary files and attributes for a code-defined module to be deployed, e.g., using an application and/or compiler, therefrom. The packaging tool 112 may persist temporarily, e.g., for the duration of a single packaging process, or may persist for repeated use until it is terminated.

The packaging tool 112 may receive user inputs from a developer via the communication interface 18 of the physical machine 10, e.g., to initiate the packaging methods disclosed, herein. To perform such methods, the packaging tool 112 may communicate with the various components of the system 100, e.g., via the communication interface 18 of the physical machine 10 and one or more suitable networks.

The module source files 114, which may include one or more module source files 114, represent the code, libraries, files and other resources used to define a given laC module 132. The module source files 114 may be created and/or stored within the build environment 110, e.g., in the memory 14 and/or the storage media 16 of the physical machine 10. The module source files 114 may represent the components from which an laC module 132 can be constructed. The module source files 114 may include references, i.e., in the form of relative paths, to the binary files 116. In a module build based, for example, on more than one script of source code, the module source files 114 may include the plurality of scripts. Hence, when it comes to identifying at least one relative path to a binary file, the methods herein disclosed may involve parsing a plurality of module source files 114, i.e., scripts, e.g., in series or in parallel.

The binary files 116 represent the binary artifacts used, in part, to define a given laC module 132. A binary file is a file that contains data in a format that is not directly human-readable, as it is represented in binary (0s and 1s) rather than plain text. Unlike text files, which store data using a character encoding system like ASCII or UTF-8 and can be viewed in a text editor, binary files can contain any type of data, including databases, multimedia files, executable files, and so on. An advantage of using binary files is that they are more efficient for storage. The binary files 116 may be created and/or stored within the build environment 110, e.g., in the memory 14 and/or the storage media 16 of the physical machine 10. The binary files 116 may be referenced within the module source files 114 as artifacts for use when deploying a given laC module 132 using an laC application 120. As discussed, storage of the binary files 116 is typically not supported by the laC application module registry 130 associated with the laC application 120. This is because the primary purpose of laC application 120 is to manage infrastructure and configuration as code, rather than handling generic data storage or file manipulation.

The laC application 120 may allow a developer to define and deploy computing infrastructure, e.g., cloud-based resources 144 on a cloud account 140, using code. The laC application 120 may represent a software application or utility executing on the cloud. Alternatively, the laC application 120 may execute on the physical machine 10. The laC application 120 may include a user interface 122 for allowing a developer to interact with the laC application 120 to deploy one or more laC modules 132, as stored in the laC application module registry 130. The laC application 120 may be configured for communication with the other components of the system 100, e.g., via one or more suitable networks. Terraform by HashiCorp^{®} is an example of laC application 120 that may be used in conjunction with the invention. Other example laC applications 120 with similar functions and/or components as Terraform may be used in conjunction with the invention.

The laC application module registry 130 may provide a repository associated with the laC application 120 for storing, amongst other things, laC modules 132 for subsequent deployment, i.e., to create cloud-based resources 144 using the laC application 120. The laC application module registry 130 may be provisioned on the cloud and may communicate with the build environment 110 (and the other components of the system 100), e.g., for upload and download of data, via one or more suitable networks. A developer laC application account associated with a developer and the laC application 120 may permit the developer from accessing one or more laC modules 132 associated with the developer from the laC application module registry 130. As discussed, the laC application module registry 130 typically does not support the storage of binary files 116 and instead only supports the storage of text files.

The cloud account 140 may represent an account of any cloud platform (not shown) that is capable of object storage and capable of provisioning cloud-based resources 144 based on laC modules 132 deployed using the laC application 120. The cloud account 140 may be associated with a developer responsible for developing on and maintaining the build environment 110. The cloud account 140 may include a cloud-based object storage 142 for storing objects 146 containing content from the binary files 116. The cloud-based resources 144 represent compute resources provisioned on the cloud using the cloud account 140 and using one or more of the laC modules 132 deployed by the laC application 120. The cloud account 140 may be configured for communication with the other components of the system 100 using one or more suitable networks. The cloud platform may be provided by a third party, such as Amazon Web Services (AWS) and Microsoft Azure.

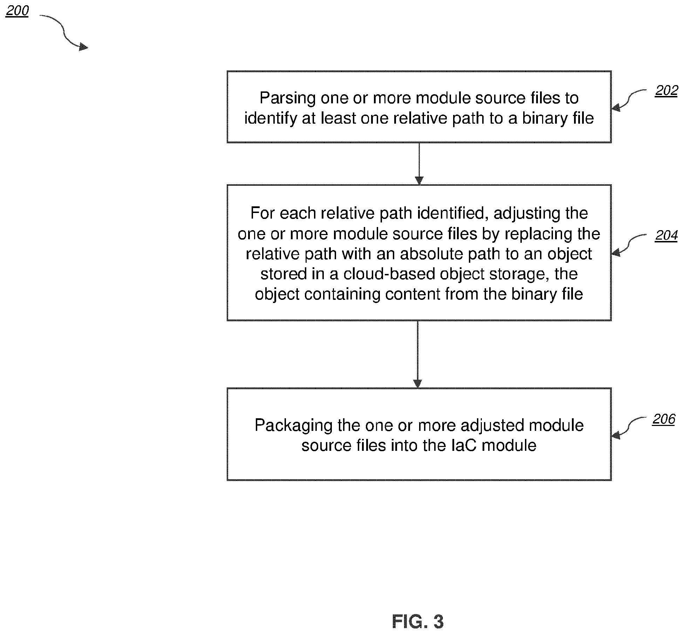

Referring to Fig. 3, a flow diagram of a method 200 of packaging one or more module source files for an laC module that is not able to store binary files, is shown. In a preferred embodiment, the method is performed by the packaging tool 112 within the build environment 110. The method 200 will, therefore, be described with reference to the system 100 shown in Fig. 2.

A first step 202 of the method 200 involves parsing one or more module source files 114 to identify at least one relative path to a binary file 116. This first step 202 may be initiated by a developer creating a module build in the build environment 110, which may involve creating and/or storing one or more module source files 114 and binary files 116 within the build environment 110. The module source files 114 may include one or more references to one or more binary files 116 within the build environment 110, which may take the form of one or more relative paths stored within the module source files 116. Accordingly, upon creation of the module build and/or creation or storage of the module source files 114 and the binary files 116 within the build environment 110, the packaging tool 112 may be invoked to perform the packaging methods disclosed, herein. Although the packaging tool 112 may be invoked automatically, upon detection of creation of the module build and/or the module source files 114 and the binary files 116, the packaging tool 112 may, in alternative embodiments, be invoked by a developer providing a user input to the build environment 110, e.g., as an input to the physical machine 10.

In some embodiments, parsing the one or more module source files 114 to identify at least one relative path to a binary file 116 involves first searching for the one or more module source files 114 in a working directory of the build environment 110. Once the one or more module source files 114 are identified, the one or more module source files 114 may be parsed to analyse and extract from the module source files 114, e.g., source code, at least one relative path to a binary file 116. For the purposes of the present disclosure, the term 'parsing' takes its ordinary meaning in the art and may, e.g., include lexing and parsing source code. An example of a relative path to a location within a working directory of the build environment 110 may be `build/example.zip', where `build' represents the working directory of the build environment 110.

A second step 204 of the method 200 involves, for each relative path identified, adjusting the one or more module source files 114 by replacing the relative path with an absolute path to an object 146 stored in a cloud-based object storage 142, the object 146 containing content from the binary file 116. For the purposes of the present disclosure, the term 'absolute path' takes its ordinary meaning in the art. For example, an absolute path may describe a path using a full URL, e.g., in HTML form. In an example where the cloud-based object storage 142 is provisioned on Amazon S3, an example of an absolute path to an object 146 (in the cloud-based object storage 142) containing content from the binary file 116 may be `s3://example_bucket/example.zip', where `s3' represents the domain name of the cloud-based object storage and 'example_bucket' represents the bucket, i.e., repository, for the object 146.

The manner in which an absolute path may be obtained depends on whether or not there exists, for a given relative path, a corresponding and pre-existing absolute path. In an embodiment of the invention, step 204 involves, for each relative path to a binary file identified, checking a cache for a copy of the relative path. The cache may be provisioned within the memory 14 or the storage media 16 of the physical machine 10 on which the build environment 110 may be provisioned. In some embodiments, checking a cache for a copy of a given relative path may involve using one or more hash maps to associate a given relative path with an object identifier, should one exist, where the object identifier comprises an object key and a checksum created based on a content of the binary file associated with the given relative path. In some embodiments, the hash maps include a first hash map, associating the copy of the given relative path with the checksum, and a second hash map, associating the checksum with the object identifier.

Accordingly, where a pre-existing absolute path for a given relative path to a binary file has been established, checking a cache for a copy of the relative path involves determining that the copy of the relative path is present in the cache by identifying, using the relative path as input to the one or more hash maps, a corresponding object identifier, which includes the object key. The object key allows a pre-existing absolute path to be constructed, therefrom. In such an instance, i.e., where a pre-existing absolute path for a given relative path to a binary file has been established, adjusting the one or more module source files 114 by replacing the relative path with an absolute path to an object 146 stored in the cloud-based object storage 142 involves replacing, in the module source files 114, the relative path with the pre-existing absolute path.

Alternatively, where a pre-existing absolute path for a given relative path to a binary file has yet to be established, checking a cache for a copy of the relative path involves determining that a copy of the relative path is not found in the cache. In such an instance, the step 204 may involve instructing the cloud-based object storage 142 to create and store the object 146 in the cloud-based object storage 142. An object 146, also known as a cloud-based object, provides a container for data within the cloud-based object storage 142. In the context of the present disclosure, an object is configured to store content from a binary file. In some embodiments, instructing the cloud-based object storage 142 to create and store the object 146 in the cloud-based object storage 142 involves the packaging tool 112 reading the content from the binary file 116 referenced by the relative path, and creating a checksum based on the content from the binary file 116, before creating an object key based on the checksum. The packaging tool 112 may then instruct the cloud-based object storage 142 to create and store the object 146 using the object key which, ultimately, is based on the content from the binary file 116, before uploading the content from the binary file 116 to the object 146. So that the packaging tool 112 is able to re-identify or re-reference the object 146 created for the referenced binary file 116, the packaging tool may store in a cache of the build environment, e.g., in a memory 14 of the physical machine 10, the details identifying the object and, in a manner, its contents, i.e., the object key and the checksum.

In some instances, however, the packaging tool 112 may determine, before instructing the cloud-based object storage 142 to create and store a new object 146, that a pre-existing object 146, albeit corresponding to a different relative path, exists in the cloud-based object storage 142 and has the same binary file content. The packaging tool 112 can perform this check by using the checksum to evaluate the content in pre-existing objects 146 of the cloud-based object storage 142. To avoid the time and resource waste in creating another object 146 containing the same content, the packaging tool 112 may map the reference to the binary file 116 to the pre-existing object 146 with the same content, i.e., by replacing the relative path in the module source files 114 with an absolute path to the pre-existing object 146 having the same content. Accordingly, in such an instance, the packaging tool 112 may store in the cache, for the given relative file, an object identifier that relates to the pre-existing object.

As indicated in step 204, the process of adjusting the one or more module source files 114 by replacing the relative path with an absolute path to an object 146 stored in a cloud-based object storage 142 may be repeated for each relative path identified from parsing the one or more module source files 114.

A third step 206 of the method 200 involves packaging the one or more adjusted module source files 114 into the laC module 132. At a high level, this may involve storing all of the adjusted module source files 114 into a single folder or an equivalent unified directory that is compatible for storage on the laC application module registry 130.

The method 200 thus provides a means of for packaging one or more module source files (containing references to binary files) for an laC module, where the laC module is not able to store binary files.

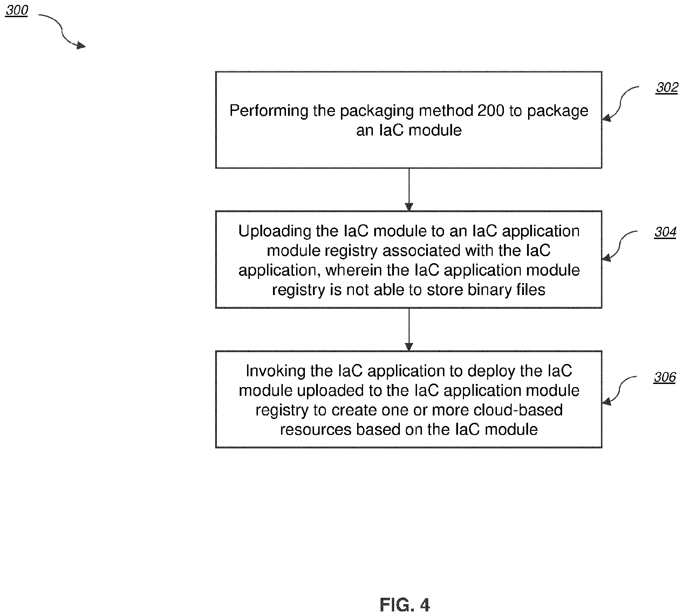

Referring to Fig. 4, a flow diagram of a method 300 of deploying an laC module to create one or more cloud-based resources using an laC application, according to an embodiment of the invention. In a preferred embodiment, the method is performed by a developer with access to the system 100. The method 300 will, therefore, be described with reference to the system 100 shown in Fig. 2.

A first step 302 of the method 300 involves performing the packaging method 200, as discussed with reference to Fig. 2, to package an laC module 132. The method 200 may, in an embodiment, be performed by a developer invoking the packaging tool 112 upon creation of the module source files 114 and the binary files 116. The method 200 culminates with packaging one or more adjusted module source files 114 into an laC module 132.

A second step 304 of the method 300 involves uploading the laC module 132 to an laC application module registry 130 associated with the laC application 120, where the laC application module registry 130 is not able to store binary files. This may involve the developer uploading or transferring the laC module 132 from the build environment 110 to the laC application module registry 130 via one or more suitable networks. The laC application module registry 130 may require the developer to login via an associated laC application account to upload the laC module 132 to a private store associated with the developer on the laC application module registry 130.

A third step 306 of the method 300 involves invoking the laC application 120 to deploy the laC module 132 uploaded to the laC application module registry 130 to create one or more cloud-based resources 144 based on the laC module 132. This may involve the developer accessing the laC application 120, via an associated laC application account, via the user interface 122 to deploy the laC module 132 as one or more cloud-based resources 144 on the cloud account 140. The laC application module registry 130 is associated with the laC application 120, i.e., in the sense that they are provided by the same entity, meaning that the laC application 120 is able to fetch or download the laC module 132 from the laC application module registry 130 upon the request of the developer.

Deploying the laC module 132 may involve the laC application 120 communicating with the cloud account to create the cloud-based resources 144 on the cloud account 140. Due to the effect of the packaging method 200, the cloud-based resources 144, when deployed, will be configured to reference each absolute path to the cloud-based object storage 142 and are capable of fetching the respective binary file 116 from the cloud-based object storage 142 based on the respective absolute path. Again, this is made possible since the cloud-based resources 144 are created on an account 140 that has access to the cloud-based object storage 142 and the objects 146 (containing content from the binary files 116), therein.

Accordingly, the invention provides a means for deploying laC modules that reference binary files, and that are stored in laC application module registries not able to store binary files, from laC applications without requiring manual intervention during module deployment.

### General

The invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The methods herein described may be performed by software in machine readable form on a tangible storage medium e.g. in the form of a computer program comprising computer program code means adapted to perform all the steps of any of the methods described, herein when the program is run on a computer and where the computer program may be embodied on a computer readable medium. Examples of tangible (or non-transitory) storage media include disks, thumb drives, memory cards etc., and do not include propagated signals. The software can be suitable for execution on a parallel processor or a serial processor such that the method steps may be carried out in any suitable order, or simultaneously. This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realise that storage media utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

Unless otherwise indicated each embodiment as described may be combined with another embodiment as described.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without necessarily departing from the scope of this invention.

### Embodiments

The following list provides embodiments of the invention and forms part of the description. These embodiments can be combined in any compatible combination beyond those expressly stated. The embodiments can also be combined with any compatible features described, herein.
1. A computer-implemented method of packaging one or more module source files for an infrastructure as code, laC, module, wherein the laC module is not able to store binary files, the method comprising:
   parsing one or more module source files to identify at least one relative path to a binary file;
   for each relative path identified, adjusting the one or more module source files by replacing the relative path with an absolute path to an object stored in a cloud-based object storage, the object containing content from the binary file; and
   packaging the one or more adjusted module source files into the laC module.
2. The method of embodiment 1, further comprising:
   for each relative path to a binary file identified, checking a cache for a copy of the relative path.
3. The method of embodiment 2, further comprising:
   determining that the copy of the relative path is present in the cache; and
   constructing the absolute path from an object identifier associated with the object and stored in the cache,
   wherein the object stored in the cloud-based storage is a pre-existing object.
4. The method of embodiment 3, wherein determining that the copy of the relative path is present in the cache comprises:
   looking up in the cache, using the relative path as a first key for a first hash map, a checksum based on the content from the binary file; and
   looking up in the cache, using the checksum as a second key for a second hash map, the object identifier associated with the object,
   wherein the object identifier comprises a copy of the checksum and an object key based on the checksum, and
   wherein constructing the absolute path from an object identifier associated with the object and stored in the cache comprises:
      constructing the absolute path from the object key and a domain name associated with the cloud-based object storage; and
      verifying, using the copy of the checksum, that the object contains the content from the binary file.
5. The method of embodiment 2, further comprising
   determining that the copy of the relative path is not found in the cache;
   instructing the cloud-based object storage to create and store the object; and
   storing, in the cache, an object identifier associated with the object.
6. The method of embodiment 5, wherein determining that the copy of the relative path is not found in the cache comprises:
   searching the cache for the copy of the relative path; and
   finding no copy of the relative path in the cache.
7. The method of embodiment 5 or embodiment 6, wherein instructing the cloud-based object storage to create and store the object comprises:
   reading the content from the binary file;
   creating a checksum based on the content from the binary file;
   creating an object key based on the checksum;
   determining, based on the object key, that a pre-existing object containing content from the binary file does not exist in the cloud-based object storage;
   instructing the cloud-based object storage to create and store the object based on the object key; and
   uploading the content from the binary file to the object.
8. The method of embodiment 5 or embodiment 6, wherein instructing the cloud-based object storage to create and store the object comprises:
   reading the content from the binary file;
   creating a checksum based on the content from the binary file;
   creating an object key based on the checksum; and
   determining, based on the object key, the presence of a pre-existing object containing content from the binary file in the cloud-based object storage; and
   verifying, using the checksum, that the pre-existing object contains the content from the binary file;
   wherein the object stored in the cloud-based storage is the pre-existing object.
9. The method of embodiment 7 or embodiment 8, wherein the object identifier associated with the object comprises the object key and a copy of the checksum.
10. The method of any preceding embodiment, wherein the laC module is deployable by an laC application to create one or more cloud-based resources based on the laC module, and
   wherein the laC module is configured for storage in an laC application module registry associated with the laC application and not able to store binary files.
11. The method of embodiment 10, wherein the laC application is Terraform.
12. The method of any preceding embodiment, wherein the method is performed by a packaging tool within a build environment.
13. The method of embodiment 12, wherein the binary files and/or the one or more module source files are stored within the build environment.
14. The method of embodiment 13, wherein the binary files and/or the one or more module source files are created within the build environment.
15. The method of any one of embodiments 12 to 14, further comprising:
   prior to parsing one or more module source files to identify at least one relative path to a binary file, searching the build environment for the one or more module source files.
16. A system comprising:
   a packaging tool configured to perform the method of any preceding embodiment.
17. A computer program product storing instructions which, when executed, cause a computer to perform the method of any of embodiments 1 to 15.
18. A computer-implemented method of deploying an laC module to create one or more cloud-based resources using an laC application, the method comprising:
   performing the method of any one of embodiments 1 to 15 to package an laC module;
   uploading the laC module to an laC application module registry associated with the laC application, wherein the laC application module registry is not able to store binary files; and
   invoking the laC application to deploy the laC module uploaded to the laC application module registry to create one or more cloud-based resources based on the laC module,
   wherein the one or more cloud-based resources are configured to reference each absolute path to the cloud-based object storage and are capable of fetching the respective binary file from the cloud-based object storage based on the respective absolute path.

## Claims

1. A computer-implemented method of packaging one or more module source files for an infrastructure as code, laC, module, wherein the laC module is not able to store binary files, the method comprising:
parsing one or more module source files to identify at least one relative path to a binary file;
for each relative path identified, adjusting the one or more module source files by replacing the relative path with an absolute path to an object stored in a cloud-based object storage, the object containing content from the binary file; and
packaging the one or more adjusted module source files into the laC module.

2. The method of claim 1, further comprising:
for each relative path to a binary file identified, checking a cache for a copy of the relative path.

3. The method of claim 2, further comprising:
determining that the copy of the relative path is present in the cache; and
constructing the absolute path from an object identifier associated with the object and stored in the cache,
wherein the object stored in the cloud-based storage is a pre-existing object.

4. The method of claim 3, wherein determining that the copy of the relative path is present in the cache comprises:
looking up in the cache, using the relative path as a first key for a first hash map, a checksum based on the content from the binary file; and
looking up in the cache, using the checksum as a second key for a second hash map, the object identifier associated with the object,
wherein the object identifier comprises a copy of the checksum and an object key based on the checksum, and
wherein constructing the absolute path from an object identifier associated with the object and stored in the cache comprises:
constructing the absolute path from the object key and a domain name associated with the cloud-based object storage; and
verifying, using the copy of the checksum, that the object contains the content from the binary file.

5. The method of claim 2, further comprising
determining that the copy of the relative path is not found in the cache;
instructing the cloud-based object storage to create and store the object; and
storing, in the cache, an object identifier associated with the object.

6. The method of claim 5, wherein instructing the cloud-based object storage to create and store the object comprises:
reading the content from the binary file;
creating a checksum based on the content from the binary file;
creating an object key based on the checksum;
determining, based on the object key, that a pre-existing object containing content from the binary file does not exist in the cloud-based object storage;
instructing the cloud-based object storage to create and store the object based on the object key; and
uploading the content from the binary file to the object.

7. The method of claim 5, wherein instructing the cloud-based object storage to create and store the object comprises:
reading the content from the binary file;
creating a checksum based on the content from the binary file;
creating an object key based on the checksum; and
determining, based on the object key, the presence of a pre-existing object containing content from the binary file in the cloud-based object storage; and
verifying, using the checksum, that the pre-existing object contains the content from the binary file;
wherein the object stored in the cloud-based storage is the pre-existing object.

8. The method of claim 6 or claim 7, wherein the object identifier associated with the object comprises the object key and a copy of the checksum.

9. The method of any preceding claim, wherein the laC module is deployable by an laC application to create one or more cloud-based resources based on the laC module, and
wherein the laC module is configured for storage in an laC application module registry associated with the laC application and not able to store binary files.

10. The method of claim 9, wherein the laC application is Terraform.

11. The method of any preceding claim, wherein the method is performed by a packaging tool within a build environment.

12. The method of claim 11, wherein the binary files and/or the one or more module source files are stored within the build environment.

13. A system comprising:
a packaging tool configured to perform the method of any preceding claim.

14. A computer program product storing instructions which, when executed, cause a computer to perform the method of any of claims 1 to 12.

15. A computer-implemented method of deploying an laC module to create one or more cloud-based resources using an laC application, the method comprising:
performing the method of any one of claims 1 to 12 to package an laC module;
uploading the laC module to an laC application module registry associated with the laC application, wherein the laC application module registry is not able to store binary files; and
invoking the laC application to deploy the laC module uploaded to the laC application module registry to create one or more cloud-based resources based on the laC module, wherein the one or more cloud-based resources are configured to reference each absolute path to the cloud-based object storage and are capable of fetching the respective binary file from the cloud-based object storage based on the respective absolute path.
